# EUROPÄISCHE PATENTSCHRIFT

(11) **EP 3 985 800 B1**
(45) Veröffentlichungstag und Bekanntmachung des Hinweises auf die Patenterteilung: **09.09.2026**
(21) Anmeldenummer: 21200654.8
(22) Anmeldetag: 04.10.2021
(51) Int. Cl.: H01Q 9/36, H01Q 1/22, H01Q 5/335, H01Q 3/04, H01Q 5/328

(54) **ANTENNENANORDNUNG FÜR EIN ELEKTRISCHES GERÄT, VERFAHREN ZUR HERSTELLUNG EINER ANTENNENANORDNUNG FÜR EIN ELEKTRISCHES GERÄT, ELEKTRISCHES GERÄT, SYSTEM UMFASSEND WENIGSTENS EIN ELEKTRISCHES GERÄT**
ANTENNA ARRANGEMENT FOR AN ELECTRICAL APPARATUS, METHOD FOR MANUFACTURING AN ANTENNA ARRANGEMENT FOR AN ELECTRICAL APPARATUS, ELECTRICAL APPARATUS, SYSTEM COMPRISING AT LEAST ONE ELECTRICAL APPARATUS
AGENCEMENT D'ANTENNE POUR UN APPAREIL ÉLECTRIQUE, PROCÉDÉ DE FABRICATION D'UN AGENCEMENT D'ANTENNE POUR UN APPAREIL ÉLECTRIQUE, APPAREIL ÉLECTRIQUE, SYSTÈME COMPRENANT AU MOINS UN APPAREIL ÉLECTRIQUE

(30) Priorität: 15.10.2020 DE 102020127247
(43) Veröffentlichungstag der Anmeldung: 20.04.2022
(73) Patentinhaber: Diehl Metering Systems GmbH, 90451 Nürnberg (DE)
(72) Erfinder: Meyer, Benjamin, 90419 Nürnberg (DE); Sigl, Michael, 90587 Tuchenbach (DE)
(74) Vertreter: Diehl Patentabteilung

(56) Entgegenhaltungen:
- CN-A- 106 602 236
- US-A- 4 313 121
- US-A1- 2018 048 051
- US-B1- 6 369 775

## Beschreibung

Die vorliegende Erfindung betrifft eine Antennenanordnung für ein, insbesondere als ein Fluidzähler oder ein Wärmemengenzähler ausgebildetes, elektrisches Gerät, umfassend eine Antenne zum Senden und/oder Empfangen von Informationen mittels elektromagnetischer Wellen. Außerdem betrifft die Erfindung ein Verfahren zur Herstellung einer Antennenanordnung für ein, insbesondere als ein Fluidzähler oder ein Wärmemengenzähler ausgebildetes, elektrisches Gerät, wobei für die Antennenanordnung eine Antenne zum Senden und/oder Empfangen von Informationen mittels elektromagnetischer Wellen verwendet wird. Ferner betrifft die Erfindung ein elektrisches Gerät. Das elektrische Gerät ist beispielsweise ein Fluidzähler, insbesondere ein Wasserzähler oder ein Gaszähler, oder ein Wärmemengenzähler oder ein Kommunikationsmodul. Schließlich betrifft die Erfindung ein System umfassend wenigstens ein elektrisches Gerät.

Klassische Fluidzähler wie beispielsweise Wasseruhren, die zur Erfassung von Entnahmemengen eines Fluids aus einem Versorgungssystem dienen, arbeiten nach einem Konzept, bei dem die entnommene Fluidmenge mittels eines Rollen-Zählwerks unmittelbar am Entnahmeort angezeigt wird. Häufig ergibt sich hierbei das Problem, dass der entsprechende Entnahmeort, an dem der Fluidzähler verbaut ist, nur schwer zugänglichen oder durch Möbel oder dergleichen verstellt ist. In diesem Fall ist ein unmittelbares Ablesen der verbrauchten Fluidmenge gar nicht oder nur unter deutlich höherem Aufwand möglich. Dasselbe Problem der erschwerten Ablesbarkeit herrscht häufig auch bei Wärmemengenzählern. Aus diesem Grund sind derartige Zähler mittlerweile häufig elektrische Geräte, bei denen eine Drahtlosübertragung vom jeweiligen Zähler zu einer nicht zwingend am Entnahmeort angeordneten Auswerteinrichtung vorgesehen ist. Bei einer solchen Funkübertragung ist typischerweise zumindest zählerseitig eine Antenne zum Senden der entsprechenden Signale bzw. Informationen, nämlich mittels elektromagnetischer Wellen in entsprechenden Frequenzbereichen, vorgesehen. Naturgemäß hängt die in diesem Zusammenhang erforderliche Resonanzfrequenz der Antenne von einer konkreten Antennengeometrie ab. Folglich sind für unterschiedliche erforderliche Resonanzfrequenzen Antennen mit unterschiedlichen Geometrien erforderlich.

Aus der CN 106 602 236 A ist eine Antennenanordnung für ein elektrisches Gerät bekannt, welches eine Antenne zum Senden und/ oder Empfangen umfasst, einen als Kontaktierungsstrecke ausgebildeten Verstellabschnitt umfasst und ein Kontaktierungsmittel aufweist.

Aus der US 4 313 121 A ist eine Antennenanordnung für militätische Zwecke mit einer Antenne die über einen Vertikalabschnitt mit Impedanzschaltungen verbunden ist, bekannt. Über einen Schalter wird die Antenne mit der jeweils erforderlichen Impedanzschaltung kontaktiert.

Die US2018/048051 A1 offenbart eine Antennenanordnung für ein tragbares Gerät, bei der mehrere, simultan vorliegende Resonanzfrequenzen einer Antenne dadurch realisiert werden, dass diese über einen Bereich eines Einspeisungsabschnitts angeordneten Kondensator an eine Einspeisungsschaltung angebunden sind.

Die der Erfindung zugrundeliegende Aufgabe liegt darin, ein hinsichtlich dieses Aspekts verbessertes Konzept zur Übertragung von Informationen per Funk, insbesondere bei Fluidzählern oder Wärmemengenzählern, anzugeben.

Erfindungsgemäß wird diese Aufgabe bei einer Antennenanordnung der eingangs genannten Art dadurch gelöst, dass die Antennenanordnung einen als eine Kontaktierungsstrecke ausgebildeten Verstellabschnitt aufweist, der ein Teil der Antenne ist, wobei die Antennenanordnung ein an dem Verstellabschnitt bezüglich der Kontaktierungsstrecke positionsveränderlich angeordnetes Kontaktierungsmittel aufweist, wobei der Verstellabschnitt über das Kontaktierungsmittel mit einem eine elektrische Masse ausbildenden Masseabschnitt der Antennenanordnung elektrisch verbunden ist.

Der Masseabschnitt bildet eine elektrische Masse der Antennenanordnung, also einen leitenden Körper, der ein elektrisches Bezugspotenzial für die in der Antennenanordnung auftretenden Signal- und Betriebsspannungen darstellt. Das Bezugspotential kann Null sein. Das Kontaktierungsmittel sowie der Verstellabschnitt stellen elektrische Verbindungsglieder zwischen der Antenne und dem Masseabschnitt dar.

Physikalische Parameter der Antennenanordnung wie beispielsweise der Resonanzfrequenzbereich und/oder die Impedanz, also der komplexe Widerstand, der Antenne hängen von einer Antennengeometrie der Antennenanordnung ab. Unter der Antennengeometrie werden diejenigen Abschnitte bzw. Komponenten der Antennenanordnung verstanden, die maßgeblich für die Erzeugung von elektromagnetischen Wellen aufgrund bewegter Ladungsträger verantwortlich sind, sofern die Antennenanordnung eine elektromagnetische Welle aussendet. Sofern die Antennenanordnung zum Empfang einer elektromagnetischen Welle vorgesehen ist, ist die Antennengeometrie analog definiert als derjenige Abschnitt der Antennenordnung, in dem die von den elektromagnetischen Wellen verursachte und erfassbare Ladungsträgerverschiebung erfolgt. Die Antennengeometrie ist typischerweise unabhängig von der jeweiligen Definition dieselbe. Die Erfindung beruht auf dem Gedanken, dass die Antennengeometrie, von der beispielsweise der Resonanzfrequenzbereich abhängt, nicht ausschließlich von der konkreten geometrischen Form der Antenne, die typischerweise eine Länge zwischen 10 mm und 200 mm, insbesondere 46 mm, aufweisen kann, vorgegeben ist.

So umfasst bei der erfindungsgemäßen Antennenanordnung die Antennengeometrie neben der Antenne zusätzlich zumindest einen Teil der Kontaktierungsstrecke respektive des Verstellabschnitts, wobei dieser Teil wiederum von der Position des Kontaktierungsmittels abhängt. So kann beispielsweise in einem Extremfall der komplette Verstellabschnitt einen Teil der Antennengeometrie darstellen, wobei in einem anderen Extremfall der Verstellabschnitt gar keinen Beitrag zur Antennengeometrie liefert. Bevorzugt sind hierbei Zwischenzustände denkbar, also Positionen des Kontaktierungsmittels, bei denen sich die Antennengeometrie aus der Antenne und einem Teil des Verstellabschnitts zusammensetzt. In Abhängigkeit der Position des Kontaktierungsmittels kann die vorliegende Antennengeometrie geändert werden, wodurch letztlich Antennenparameter gezielt eingestellt werden können. Eine Einstellung des wenigstens einen verstellbaren Antennenparameters kann bereits vor der Inbetriebnahme der Antennenanordnung, insbesondere noch während des Herstellungs- bzw. Montageprozesses, durch eine entsprechende Positionierung des Kontaktierungsmittels vorgenommen werden.

Hierdurch wird vorteilhaft bewirkt, dass bei unterschiedlichen erfindungsgemäßen Antennenanordnungen, bei denen der jeweilige Sende- bzw. Empfangsbetrieb auf unterschiedlichen Frequenzbändern erfolgt, Antennen verwendet werden können, die bezüglich ihrer geometrischen Ausgestaltung gleich sind. Unterschiedliche Frequenzbänder sind beispielsweise dann erforderlich, wenn unterschiedliche Übertragungsprotokolle zur Funkübertragung vorgesehen sind. Da für unterschiedliche Antennenanordnungen einheitliche Antennen verwendet werden können, wird es ermöglicht, dass zudem weitere einheitliche Komponenten der Antennenanordnung wie etwa als Leiterplatten ausgebildete Trägerkomponenten oder dergleichen verwendet werden können. Ohne diese Modifizierbarkeit des verstellbaren Antennenparameters wäre es dagegen bei unterschiedlichen Antennenanordnungen zwingend erforderlich, unterschiedliche Antennen mit verschiedenen Geometrien und mithin auch unterschiedlich ausgebildete weitere Komponenten der Antennenanordnungen zu verwenden.

Das Kontaktierungsmittel kann ein Kurzschlusselement oder wenigstens ein passives elektrisches Bauelement sein oder aufweisen. Das elektrische Bauelement kann ein Kondensator oder eine Spule sein. Sofern das passive elektrische Bauelement ein Kondensator ist, ist dessen Kapazität bevorzugt einstellbar. Sofern das passive elektrische Bauelement eine Spule ist, ist deren Induktivität bevorzugt einstellbar.

In dem Fall, dass das Kontaktierungsmittel ein Kurzschlusselement, also ein 0-Ohm-Widerstand ist, definiert die Position des Kontaktierungsmittels die Position, an der der unmittelbare elektrische Kontakt zwischen dem Verstellabschnitt und dem Masseabschnitt, also zwischen der Antennengeometrie und dem Masseabschnitt, ausgebildet ist.

Sofern das Kontaktierungsmittel ein Kondensator ist bzw. einen Kondensator aufweist, hängt der verstellbare Antennenparameter zudem von der Kapazität des Kondensators ab. Besonders bevorzugt ist die Kapazität des Kondensators mithin einstellbar, insbesondere mittels einer an dem Kondensator anliegenden Kondensatorsteuerungsspannung.

Sofern das Kontaktierungsmittel eine Spule ist bzw. eine Spule aufweist, hängt der verstellbare Antennenparameter zudem von der Induktivität der Spule ab. Besonders bevorzugt ist die Induktivität der Spule mithin einstellbar, insbesondere mittels einer an der Spule anliegenden Spulensteuerungsspannung.

Das Kontaktierungsmittel kann einen Kondensator und eine Spule aufweisen, wobei der verstellbare Antennenparameter von der Position des Kontaktierungsmittels, der Kapazität des Kondensators und der Induktivität der Spule abhängt. Hierbei können die Kapazität des Kondensators und die Induktivität der Spule jeweils von einer anliegenden Steuerungsspannung abhängen. Alternativ können zwei voneinander unabhängig einstellbare Steuerungsspannungen vorgesehen sein.

Wie bereits erläutert wurde, wird die Position des Kontaktierungsmittels bevorzugt bereits vor der Inbetriebnahme der Antennenanordnung bzw. des zugehörigen Fluidzählers eingestellt. Dagegen kann die Kapazität des Kondensators und/oder die Induktivität der Spule auch während des Betriebs der Antennenanordnung gezielt geändert werden. Hierdurch kann bewirkt werden, dass das Frequenzband der Antennenanordnung, auf dem Funksignale übertragbar sind, verbreitert werden kann. So definiert die Antennengeometrie das Frequenzband, auf dem die Antennenanordnung senden und empfangen kann. Mittels einer Änderung der Kapazität des Kondensators und/oder der Induktivität der Spule kann ein gezieltes Hin- und Her-Verschieben dieses Frequenzband erfolgen, wodurch das tatsächlich von der Antennenanordnung nutzbare Frequenzband bezüglich der von der Antennengeometrie vorgegebenen Bandbreite quasi künstlich verbreitert werden kann.

Erfindungsgemäß ist der Verstellabschnitt länglich, wobei das Kontaktierungsmittel entlang einer Längsrichtung des Verstellabschnitts verschiebbar ist. Anders ausgedrückt kann das Kontaktierungsmittel bezüglich seiner Positionsveränderlichkeit genau einen Freiheitsgrad aufweisen, nämlich betreffend die Position entlang der Längsrichtung des Verstellabschnitts respektive der Kontaktierungsstrecke. Das Kontaktierungsmittel ist bevorzugt von einem ersten axialen Ende des Verstellabschnitts, insbesondere stufenlos, zu einem zweiten axialen Ende des Verstellabschnitts verschiebbar, wobei der verstellbare Antennenparameter von der Position des Kontaktierungsmittels entlang der Längsrichtung des Verstellabschnitts abhängt. In dieser Ausführungsform bilden der Verstellabschnitt und das Kontaktierungsmittel quasi einen Schieberegler aus, mittels dem der verstellbare Antennenparameter einstellbar ist. Zur Vereinfachung der gezielten Einstellung der Position kann eine entlang der Längsrichtung des Schiebereglers angeordnete Skala bzw. entsprechende Markierungen vorgesehen sein.

Besonders bevorzugt ist das Kontaktierungsmittel an einer Komponente der Antennenanordnung, insbesondere an dem Verstellabschnitt und/oder dem Masseabschnitt, befestigt, insbesondere verlötet. In dieser Ausführungsform kann das Kontaktierungsmittel bereits während der Montage der Antennenanordnung befestigt werden. Ein nachträgliches Ändern der Position des Kontaktierungsmittels ist mithin nicht mehr beziehungsweise nur durch ein Lösen der entsprechenden Lötstelle möglich.

Die erfindungsgemäße Antennenanordnung kann eine Leiterplatte, auf der die Antenne angeordnet ist, umfassen, wobei sich der Masseabschnitt flächig auf der Oberfläche der Leiterplatte erstrecken kann, wobei der Verstellabschnitt auf dem Masseabschnitt angeordnet sein kann oder sich flächig auf der Oberfläche der Leiterplatte erstrecken kann. Bevorzugt verläuft die Längsrichtung des Verstellabschnitts parallel zur Fläche des Masseabschnitts. Die Leiterplatte dient als ein Träger für Komponenten der Antennenanordnung, insbesondere für die Antenne und/oder den Verstellabschnitt und/oder das Kontaktierungsmittel und/oder den Masseabschnitt.

Bevorzugt ist der Masseabschnitt eine auf die Oberfläche der Leiterplatte aufgedampfte Metallschicht. Der Verstellabschnitt kann auf der Metallschicht angeordnet sein oder sich flächig, insbesondere ebenfalls als eine auf der Oberfläche der Leiterplatte aufgedampfte Metallschicht beziehungsweise Leitung, erstrecken. In beiden Fällen ist der Verstellabschnitt mit dem Masseabschnitt bevorzugt ausschließlich über das Kontaktierungsmittel elektrisch verbunden.

Für den Fall, dass der Verstellabschnitt auf dem als aufgedampfte Metallschicht vorgesehenen Masseabschnitt angeordnet ist, kann ein mechanisches Befestigungsmittel, mittels dem der Verstellabschnitt auf der Leiterplatte bzw. dem Masseabschnitt befestigt ist, vorgesehen sein. Das Befestigungsmittel kann ein elektrischer Isolator wie beispielsweise ein isolierender Klebstoff sein.

Für den Fall, dass der Verstellabschnitt und der Masseabschnitt jeweils als auf die Oberfläche der Leiterplatte aufgedampfte Metallschicht vorgesehen ist, kann der Verstellabschnitt vom Masseabschnitt mittels einer, insbesondere rahmenartigen, Ausnehmung oder Unterbrechung der Metallschicht abgegrenzt sein. Der Verstellabschnitt kann als eine Leiterbahn der Leiterplatte vorgesehen sein, die sich beispielsweise über die komplette Länge der Leiterbahn erstreckt. Sofern das Kontaktierungsmittel fest angeordnet ist, kann die Befestigung des Kontaktierungsmittels mittels eines Lots, das bevorzugt mit dem Masseabschnitt, dem Verstellabschnitt und dem Kontaktierungsmittel in Kontakt steht, erfolgen.

Sofern das Kontaktierungsmittel längsverschiebbar an dem Verstellabschnitt angeordnet ist, kann der Verstellabschnitt als eine Führungsschiene für das Kontaktierungsmittel fungieren, wobei das Kontaktierungsmittel elektrisch einerseits mit dem Verstellabschnitt und andererseits mit dem Masseabschnitt verbunden ist. Analog hierzu kann eine als separate Komponente vorgesehene Führungsschiene für das Kontaktierungsmittel vorgesehen sein. Ein Ende des Kontaktierungsmittels kann entgegen einer elastischen Rückstellkraft, die insbesondere durch das Kontaktierungsmittel selbst erzeugt wird, an den Masseabschnitt angedrückt sein um ein sicheres Ausbilden des elektrischen Kontakts zu gewährleisten.

In einer bevorzugten Ausführungsform der erfindungsgemäßen Antennenanordnung weist die an der oder einer Leiterplatte angebundene Antenne einen länglichen Antennenschaft auf, der sich von der Oberfläche der Leiterplatte, insbesondere unter einem rechten Winkel, wegweisend erstreckt. Grundsätzlich können diese Merkmale auch unabhängig von den erfindungswesentlichen Merkmalen vorgesehen sein. An einem Ende des Antennenschafts kann ein Anbindungsabschnitt vorgesehen sein, über den die Antenne an der Leiterplatte angebunden respektive befestigt ist. Bevorzugt stellt der Anbindungsabschnitt die einzige mechanische Verbindungsstelle der Antenne mit weiteren Komponenten der Antennenanordnung dar. Neben der mechanischen Befestigung der Antenne an der Leiterplatte kann der Anbindungsabschnitt auch zur elektrischen Anbindung der Antenne vorgesehen sein, worauf nachfolgend noch im Detail eingegangen werden wird.

Durch die freistehende Anordnung der Antenne auf der Leiterplatte ergeben sich mehrere Vorteile, insbesondere im Vergleich zu aus dem Stand der Technik bekannten Systemen, bei denen die Antenne typischerweise liegend und insbesondere innerhalb eines Antennenhalters aus Kunststoff angeordnet sind. So entfällt bei der freistehenden Anordnung der Antenne eine solcher Antennenhalter komplett, wodurch zusätzliches Material und ansonsten erforderliche Werkzeuge zur Herstellung des Antennenhalters wie zusätzliche Gussformen oder dergleichen eingespart werden. Auch bezüglich des Fertigungsprozesses verringert die freiststehende Anordnung der Antenne den Bestückungsaufwand. So muss zum Anbinden der Antenne an die Leiterplatte grundsätzlich nur noch eine Komponente, nämlich die Antenne selbst, auf der Leiterplatte, insbesondere vollautomatisiert, angebracht werden. Details bezüglich des Bestückungsvorgangs werden später im Rahmen des erfindungsgemäßen Verfahrens erläutert. Weiterhin werden negative Einflüsse des in dieser Ausführungsform nicht mehr erforderlichen Antennenhalters auf das Abstrahlverhalten der Antenne vermieden. So beeinflusst der Antennenhalter mitunter Antennenparameter auf eine kaum kalkulierbare Art und Weise und/oder wirkt bezüglich der abgestrahlten bzw. empfangenen elektromagnetischen Wellen abschirmend, was die Wahl eines geeigneten Werkstoffs für den Antennenhalter äußerst kompliziert werden lässt.

Die Antenne kann wenigstens einen, insbesondere stirnseitig von dem oder einem Antennenschaft der Antenne abstehenden, Steuerungspin aufweisen, über den die Antenne mit einer Steuerungseinrichtung, die dazu eingerichtet ist, den Sende- und/oder Empfangsbetrieb der Antennenanordnung zu steuern, elektrisch verbindbar oder verbunden ist. Der Steuerungspin stellt eine elektrische Schnittstelle zwischen der Antenne und der Steuerungseinrichtung dar, für die eine Lötverbindung vorgesehen sein kann. Bevorzugt ist der Steuerungspin ein Teil des zuvor erläuterten Anbindungsabschnitts. Der Steuerungspin kann mithin einen Teil zur mechanischen Befestigung bzw. Stabilisierung der Antenne auf der Leiterplatte beitragen.

Die Steuerungseinrichtung ist insbesondere dazu eingerichtet, die zu sendende Information zu codieren und eine entsprechende Spannung in die Antenne zur Erzeugung der elektromagnetischen Welle einzuspeisen. Die Steuerungseinrichtung ist insbesondere außerdem dazu eingerichtet, die zu empfangende Information zu decodieren und ein Signal, das mit einer von der Antenne empfangenen Welle korrespondiert, zu empfangen und auszuwerten. Zur Feinjustierung der Resonanzfrequenz der Antennenanordnung ist die Steuerungseinrichtung dazu eingerichtet, als eine dem Fachmann hinlänglich bekannte Anpassungsschaltung zu wirken.

Bei der erfindungsgemäßen Antennenanordnung kann zusätzlich zu dem Steuerungspin wenigstens ein stirnseitig von dem oder einem Antennenschaft der Antenne abstehender Anheftpin vorgesehen sein, über den die Antenne an der Leiterplatte befestigt ist. Der Steuerungspin und/oder der Anheftpin kann mittels einer Clinchverbindung an der Leiterplatte befestigt sein. Bei einer Clinchverbindung durchsetzt der jeweilige Pin die Leiterplatte und ist austrittsseitig derart umgebogen, dass die Antenne über den jeweiligen Pin zumindest hierdurch zunächst provisorisch, bis eine Lötverbindung ausgebildet wurde, an der Leiterplatte befestigt ist. Sofern zwei Anheftpins vorgesehen sind, können diese an ihren Enden umgebogen sein, so dass diese einander zugewandt oder voneinander abgewandt sind, um diese provisorische Befestigung der Antenne an der Leiterplatte auszubilden. Weitere Details diesbezüglich werden nachfolgend im Rahmen des erfindungsgemäßen Verfahrens beschrieben.

Bevorzugt weist die Antenne wenigstens einen, insbesondere L-förmigen und/oder seitlich von dem oder einem Antennenschaft abstehenden, Befestigungspin zur Befestigung der Antenne an der Leiterplatte auf. Besonders bevorzugt ist der Befestigungspin der Verstellabschnitt. Der Befestigungspin kann, insbesondere zusätzlich zum Steuerungspin und/oder Anheftpin, der mechanischen Anbindung der Antenne an der Leiterplatte dienen und ist bevorzugt mittels einer Löt- und/oder Clinchverbindung an der Leiterplatte befestigt. Insbesondere kann der Befestigungspin einen Großteil der möglicherweise auf die Antenne auftretenden Belastungen aufnehmen. Insbesondere im Gegensatz zu etwaigen Steuerungs- und/oder Anheftpins, die bevorzugt stirnseitig von dem Antennenschaft abstehen, bewirken die seitlich von dem Antennenschaft abstehenden und gegebenenfalls die L-förmigen Befestigungspins, dass etwaige Hebelkräfte, die auf den Anbindungsabschnitt wirken können, äußerst effektiv aufgenommen werden können und ein Abknicken der Antenne vermieden wird. Bevorzugt weist die Antennenanordnung zwei Befestigungspins auf, die gewinkelt, insbesondere senkrecht, zueinander vom Antennenschaft abstehen. Hierdurch werden etwaige Hebelkräfte in alle möglichen Richtungen effektiv durch die Befestigungspins absorbiert.

Neben der Veriante, dass der Befestigugnspin der Verstellabschnitt ist, ist es denkbar, dass der Befestigungspin mit dem Verstellabschnitt, insbesondere über einen direkten Berührungskontakt, elektrisch verbunden ist, insbesondere mittels eines Lots. Bevorzugt schließt sich der Verstellabschnitt unmittelbar an den Befestigungspin an. Hierbei kann sich der Verstellabschnitt von dem Punkt auf der Leiterplatte, an der der Befestigungspin an der Leiterplatte angebunden befestigt ist, entlang der Fläche des Masseabschnitts bzw. der Oberfläche der Leiterplatte weg erstrecken.

Zur Steigerung der Festigkeit der Antenne kann diese zumindest abschnittsweise, insbesondere zumindest in dem oder einem Antennenschaft der Antenne, ein U-förmiges Profil und/oder sicken- oder rinnenartige Vertiefungen aufweisen. Durch die U-Form des Profils bzw. die Vertiefungen erfolgt eine Aussteifung der Antennenstruktur. Insbesondere während des Fertigungsprozesses der Antennenanordnung kann ein Abknicken der insbesondere freistehenden Antenne vermieden werden. Die seitlichen Wände der U-Form des Profils der Antenne können unterbrochen sein, wodurch eine zuverlässige und wiederholgenaue Greif- und Setzfunktion eines Bestückungsroboters während der Fertigung der Antennenanordnung ermöglicht wird.

Bevorzugt weist die Antenne, insbesondere an einem Ende des oder eines Antennenschafts, einen gewinkelt zum Antennenschaft angeordneten und insbesondere ringförmigen Verlängerungsabschnitt auf. Der Verlängerungsabschnitt kann an dem dem Anbindungsabschnitt gegenüberliegenden Ende des Antennenschafts vorgesehen sein. So kann der Verlängerungsabschnitt den Bauraumbedarf einer Antenne, die eine Resonanzfrequenz aufweist, die grob der erforderlichen Resonanzfrequenz entspricht, im Gegensatz zu einer rein länglich ausgebildeten Antenne verkleinern. Der Verlängerungsabschnitt kann sich in einer Ebene erstrecken, die gewinkelt und insbesondere senkrecht zum Antennenschaft steht.

Der Verlängerungsabschnitt und der Antennenschaft können einstückig ausgebildet sein. Alternativ kann der Verlängerungsabschnitt und der Antennenschaft jeweils einen Verbindungsabschnitt aufweisen, über den diese beiden Komponenten, insbesondere unter Ausbildung eines Formschlusses, formstabil miteinander verbunden sind. Der Verlängerungsabschnitt kann zur Erhöhung der mechanischen Festigkeit bzw. zur Versteifung einen Falz bzw. eine sicken- oder rinnenartige Vertiefung aufweisen.

Die erfindungsgemäße Antennenanordnung kann zum Übertragen von Informationen mittels elektromagnetischer Wellen im Hochfrequenzbereich ausgebildet sein. Insbesondere können hierbei sogenannte ISM-Bänder (Industrial, Scientific and Medical bands) vorgesehen sein, bevorzugt in dem 868 MHz und/oder 433 MHz Band. ISM-Bänder bezeichnen Hochfrequenzbereiche, wie sie typischerweise in Industrie, Wissenschaft oder Medizin und typischerweise genehmigungsfrei genutzt werden können. Der Hochfrequenzbereich kann zusätzlich oder alternativ im Bereich von 450 MHz bis 680 MHz und/oder 790 MHz bis 960 MHz vorgesehen sein.

Erfindungsgemäß wird die Aufgabe zudem bei einem Verfahren der eingangs genannten Art, insbesondere zur Herstellung der Antennenanordnung nach der vorangehenden Beschreibung, dadurch gelöst, dass die Antenne mit einem Verstellabschnitt elektrisch verbunden wird oder ein einen Teil der Antenne ausbildenden Verstellabschnitt verwendet wird, wobei an den eine Kontaktierungsstrecke ausbildenden Verstellabschnitt ein Kontaktierungsmittel bezüglich der Kontaktierungsstrecke positionsveränderlich oder fest angeordnet wird, wobei der Verstellabschnitt über das Kontaktierungsmittel mit einem eine elektrische Masse ausbildenden Masseabschnitt elektrisch verbunden wird. Sämtliche Vorteile und Merkmale der erfindungsgemäßen Antennenanordnung gelten gleichermaßen für das erfindungsgemäße Verfahren und umgekehrt.

In einer Weiterbildung des erfindungsgemäßen Verfahrens kann vorgesehen sein, dass die oder den oder einen länglichen Antennenschaft aufweisende Antenne derart an der oder einer Leiterplatte angebunden wird, dass sich der Antennenschaft von der Oberfläche der Leiterplatte wegweisend erstreckt, wobei die Antenne über wenigstens den oder einen, insbesondere stirnseitig von dem oder einem Antennenschaft der Antenne abstehenden, Steuerungspin mit der oder einer Steuerungseinrichtung, die dazu eingerichtet ist, den Sende- und/oder Empfangsbetrieb der Antennenanordnung zu steuern, verbunden wird, wobei der Steuerungspin und/oder der oder ein Befestigungspin und/oder wenigstens ein Anheftpin mit der Leiterplatte, nachdem die Antenne auf der Leiterplatte angeordnet wurde und bevor der Steuerungspin und/oder der Befestigungspin und/oder der Anheftpin verlötet wird, auf der Leiterplatte, insbesondere mittels einer Clinchverbindung, angeheftet wird.

Zur Bestückung der Leiterplatte mit der Antenne kann ein Bestückungsroboter mit einer Greifvorrichtung verwendet werden, mittels der die Antenne gegriffen, zur Leiterplatte gebracht und auf diese aufgesetzt wird. Wie bereits erläutert können, sofern die seitlichen Wände des Profils der Antenne eine U-Form aufweisen, diese unterbrochen sein, so dass eine zuverlässige und wiederholgenaue Greif- und Setzfunktion des Bestückungsroboters während der Fertigung der Antennenanordnung, die insbesondere in einer vollautomatisierten Fertigungsstraße erfolgt, ermöglicht wird.

Bevorzugt werden zwei Anheftpins verwendet, die an ihren Enden zueinander umgebogen werden um eine provisorische Befestigung der Antenne an der Leiterplatte auszubilden. Vorliegend kann also während der Produktion der Antennenanordnung die Antenne auf die Leiterplatte derart angeordnet werden, so dass der Steuerungspin und/oder der Befestigungspin und/oder der Anheftpin jeweils eine Bohrung der Leiterplatte durchsetzt, wobei anschließend die Antenne mittel der Clinchverbindung an der Leiterplatte provisorisch angeheftet wird, wobei nachfolgend die Verlötung des Steuerungspins und/oder des Anheftpins an der Leiterplatte erfolgt.

Außerdem wird die Aufgabe durch ein elektrisches Gerät gelöst, das zumindest eine Antennenanordnung gemäß der obigen Beschreibung umfasst. Das elektrische Gerät kann ein Fluidzähler, insbesondere ein Wasserzähler oder ein Gaszähler, oder ein Wärmemengenzähler, also ein Messgerät zur Ermittlung der Wärmeenergie, welche insbesondere in einem Wärmekreislauf von einem Verbraucher entnommen wurde, oder ein Kommunikationsmodul sein. Sämtliche Vorteile und Merkmale der erfindungsgemäßen Antennenanordnung sowie des erfindungsgemäßen Verfahrens sind gleichermaßen auf das erfindungsgemäße elektrische Gerät anwendbar und umgekehrt.

Insofern das elektrische Gerät ein Fluidzähler ist, weist dieses eine Erfassungseinheit zur Erfassung einer Entnahmemenge eines Fluids aus einem Versorgungssystem an einer dem Fluidzähler zugeordneten Entnahmestelle auf. Die Erfassungseinheit kann die Entnahmemenge mittels Ultraschall oder dergleichen erfassen. Die Erfassungseinheit kann eine erfassungseinheitsseitige Steuerungseinrichtung, die mit der antennenanordnungsseitigen Steuerungseinrichtung zur Übertragung von Informationen betreffend die von der Erfassungseinheit erfasste Durchflussmenge, aufweisen. Ferner kann lediglich die antennenanordnungsseitige Steuerungseinrichtung vorgesehen sein, mittels der die Erfassungseinrichtung und die Antennenanordnung gesteuert werden. Der Fluidzähler kann mittels eines elektrischen Energiespeichers betrieben werden, die beispielsweise eine Ladungsträgerkapazität von höchstens 20 Ah aufweist.

Der Fluidzähler weist zudem typischerweise ein Gehäuse aus, in dem die Antennenanordnung bzw. die Antenne und die Erfassungseinheit aufgenommen sind. Wie bereits weiter oben erläutert wurde, erlaubt es die erfindungsgemäße Lösung der Aufgabe, dass für verschiedene Fluidzählertypen, die insbesondere verschiedene Funkprotokolle mit unterschiedlichen Frequenzbändern zur Kommunikation aufweisen, einheitlich ausgebildete Gehäuse verwendet werden können, wodurch letztlich die Herstellung bzw. Produktion derartiger Fluidzähler, die im Rahmen mehrerer verschiedener Ausführungstypen vorgesehen sind, deutlich vereinfacht wird.

Schließlich wird die Aufgabe durch ein System umfassend wenigstens ein elektrisches Gerät, insbesondere einen Fluidzähler oder einen Wärmemengenzähler, gemäß der obigen Beschreibung und wenigstens eine Auswerteinrichtung zur Auswertung der Information, gelöst, wobei mittels der Antennenanordnung eine, insbesondere bidirektionale, Kommunikationsverbindung zwischen dem wenigstens einen elektrischen Gerät und der wenigstens einen Auswerteinrichtung herstellbar ist. Die Auswerteinrichtung kann hierzu eine, insbesondere erfindungsgemäße, Antennenanordnung aufweisen. Zur Steuerung der Auswerteinrichtung, insbesondere der Kommunikationsverbindung, weist diese eine auswerteinrichtungsseitige Steuerungseinrichtung auf. Sämtliche Merkmale und Vorteile der erfindungsgemäße Antennenanordnung, des erfindungsgemäßen Verfahrens und des erfindungsgemäßen elektrischen Gerätes sind analog auf das System anwendbar und umgekehrt.

Bevorzugt umfasst das System mehrere elektrische Geräte, insbesondere Fluidzähler und/oder Wärmemengenzähler, die in einer Wohneinheit angeordnet oder anordenbar sein können, wobei jeder der elektrischen Geräte einem separaten Haushalt zuordenbar ist. Die Auswerteinrichtung kann eine zentrale Auswerteinrichtung sein, die dazu eingerichtet ist, Kontakt mit den elektrischen Geräten über eine Funkverbindung aufzunehmen.

Sofern es sich bei den elektrischen Geräten um Fluidzähler und/oder Wärmemengenzähler handelt, kann die Auswerteinrichtung dazu eingerichtet sein, die die Entnahmemenge betreffenden Informationen der einzelnen Zähler zu sammeln, auszuwerten, zu verwalten und gegebenenfalls an einen Versorgungsanbieter zu übermitteln. Insbesondere kann die Auswerteinrichtung ein Anfragesignal aussenden, das mittels den Antennenanordnungen der Zähler erfasst wird, wobei jeweils ein mittels der Antennenanordnung gesendetes Antwortsignal bei jedem der Zähler generiert wird. Die Information des Antwortsignals umfasst hierbei bevorzugt weitere Informationen wie beispielsweise eine Zähleridentifikationsnummer, einen Startzählerstand oder dergleichen. Die Auswerteinrichtung kann ebenfalls eine Antennenanordnung auf, die der oben beschriebenen, erfindungsgemäßen Antennenanordnung entsprechen kann. Bevorzugt wird über die Antennenanordnungen jeweils eine bidirektionale Kommunikationsverbindung zwischen der Auswerteinrichtung und jedem der Zähler hergestellt.

Weitere Vorteile und Einzelheiten der Erfindung ergeben sich aus den nachfolgend beschriebenen Ausführungsbeispielen sowie anhand der Zeichnungen. Hierbei zeigen schematisch:
- Fig. 1: ein erstes Ausführungsbeispiel einer erfindungsgemäßen Antennenanordnung,
- Fig. 2: eine Detailansicht einer Antenne der Antennenanordnung der Fig. 1,
- Fig. 3: eine Draufsicht von oben auf die Antennenanordnung der Fig. 1,
- Fig. 4: eine geschnittene Ansicht entlang der Linie IV - IV durch die Antennenanordnung der Fig.1,
- Fig. 5: ein Smith-Diagramm für die Impedanz der Antenne der Antennenanordnung der Fig.1,
- Fig. 6: ein zweites Ausführungsbeispiel einer erfindungsgemäßen Antennenanordnung,
- Fig. 7: ein Flussdiagramm eines Ausführungsbeispiel eines erfindungsgemäßen Verfahrens,
- Fig. 8: ein Ausführungsbeispiel eines erfindungsgemäßen elektrischen Gerätes, das als ein Fluidzähler ausgebildet ist, und
- Fig. 9: ein Ausführungsbeispiel eines erfindungsgemäßen Systems.

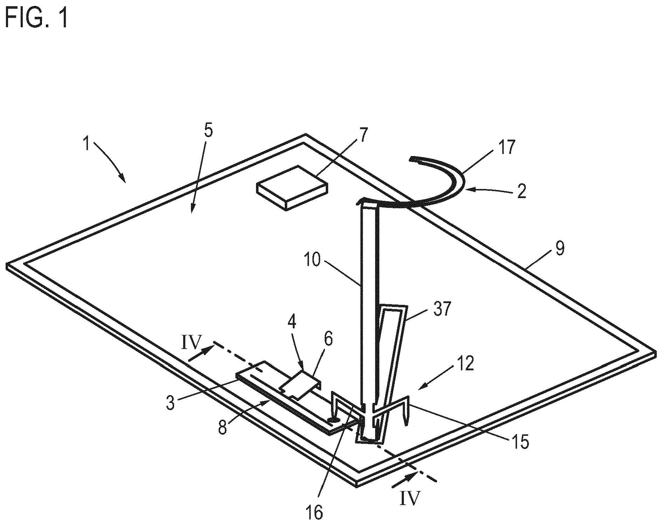

Fig. 1 zeigt ein erstes Ausführungsbeispiel einer erfindungsgemäßen Antennenanordnung 1 umfassend eine Antenne 2 zum Senden und/oder Empfangen von Informationen mittels elektromagnetischer Wellen. Diese Funkverbindung betrifft den Hochfrequenzbereich, nämlich das 868 MHz ISM-Band. Zusätzlich oder alternativ kann die Antennenanordnung zur Kommunikation im 433 MHz ISM-Band und/oder im Band von 450 MHz bis 680 MHz und/oder im Band zwischen 790 MHz und 960 MHz ausgebildet sein.

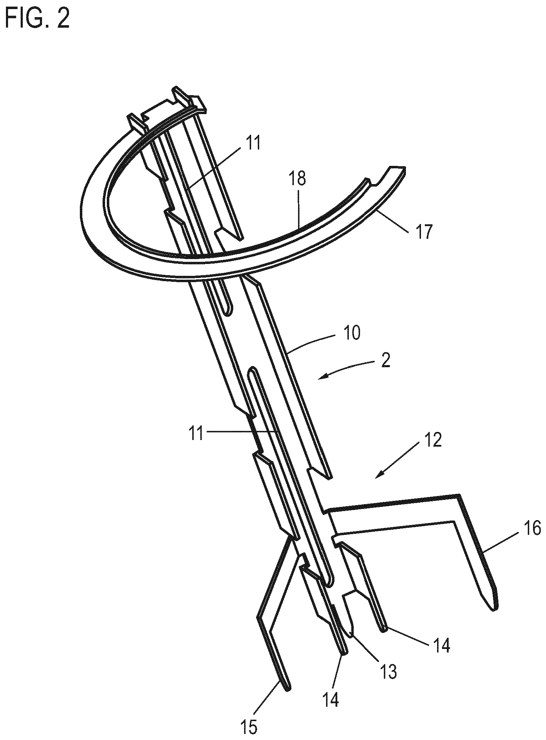

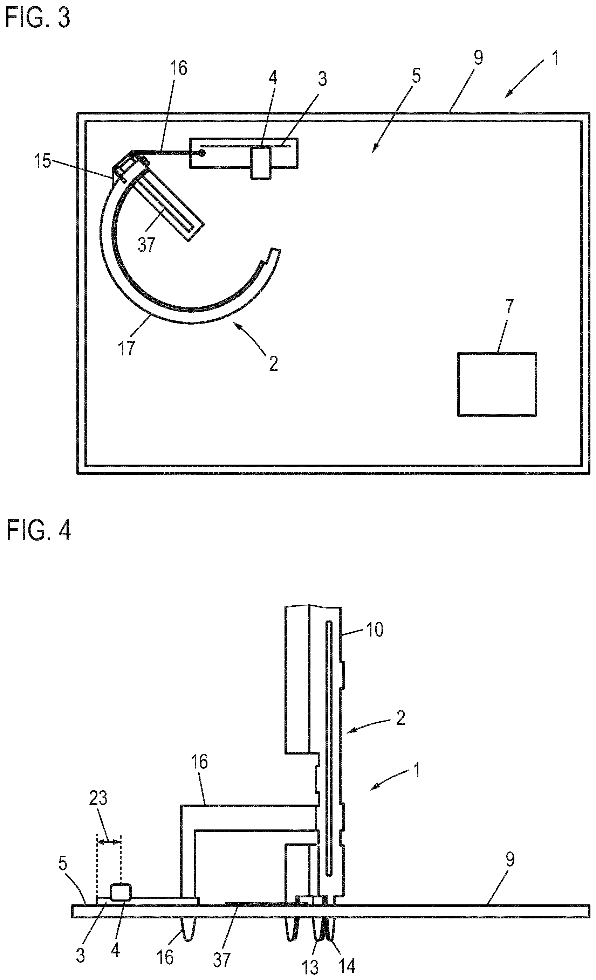

Fig. 2 zeigt Details der Antenne 2. Weitere Aspekte der Antennenanordnung 1 werden anhand der Fig. 3, die eine Draufsicht der Antennenanordnung 1 aus Fig.1 zeigt, und der Fig. 4, die eine geschnittene Ansicht entlang der Linie IV - IV durch die Antennenanordnung 1 der Fig. 1 zeigt, erläutert.

Die Antennenanordnung 1 weist einen mit der Antenne 2 elektrisch verbundenen Verstellabschnitt 3 und ein an dem Verstellabschnitt 3 positionsveränderlich angeordnetes Kontaktierungsmittel 4 auf. Der Verstellabschnitt 3 ist über das Kontaktierungsmittel 4 mit einem eine elektrische Masse ausbildenden Masseabschnitt 5 der Antennenanordnung 1 elektrisch verbunden. Eine Positionsveränderung des Kontaktierungsmittels 4 bewirkt eine Änderung der Stelle, an der der Verstellabschnitt 3 mit dem Kontaktierungsmittel 4 und mithin mit dem Massenabschnitt 5 elektrisch verbunden ist. Der Verstellabschnitt 3 stellt mithin eine Kontaktierungsstrecke dar. Somit bewirkt eine Änderung der Position des Kontaktierungsmittels 4 an dem Verstellabschnitt 3 eine Änderung einer Antennengeometrie der Antennenanordnung 1.

Physikalische Parameter der Antennenanordnung 1, insbesondere die Resonanzfrequenz, bei der elektromagnetische Wellen besonders effektiv gesendet bzw. empfangen werden können, oder die Impedanz, hängen von der Antennengeometrie ab. Die Antennengeometrie bezeichnet die Teile bzw. Komponenten der Antennenanordnung 1, in denen, sofern die Antennenanordnung 1 sendet, eine Ladungsträgerverschiebung derart erfolgt, dass die entsprechenden elektromagnetischen Wellen abgestrahlt werden und in denen, sofern die Antennenanordnung 1 empfängt, die von den von außen einfallenden elektromagnetischen Wellen verursachte und erfassbare Ladungsträgerverschiebung erfolgt.

Eine Änderung der Position des Kontaktierungsmittels 4 bewirkt folglich eine Änderung der Antennengeometrie und letztlich auch der zuvor genannten Antennenparameter wie beispielsweise der Resonanzfrequenz und/oder der Impedanz. Durch die Positionsveränderlichkeit des Kontaktierungsmittels 4 sind die Antennenparameter folglich verstellbar und können an die jeweiligen Erfordernisse der Antennenanordnung 1 angepasst werden.

Das Kontaktierungsmittel 4 ist vorliegend ein passives elektrisches Bauelement 6. Das passive elektrische Bauelement 6 kann ein Kondensator oder eine Spule sein. Exemplarisch weist der Kondensator eine einstellbare Kapazität beziehungsweise die Spule eine einstellbare Induktivität auf, so dass die verstellbaren Antennenparameter nicht nur von der Position des Kontaktierungsmittels 4, sondern zusätzlich von der Kapazität des Kondensators beziehungsweise der Induktivität der Spule abhängen. Die Kapazität des Kondensators beziehungsweise der Induktivität der Spule kann hierbei mittels einer elektrisch an dem Kondensator beziehungsweise der Spule anliegenden Steuerspannung eingestellt werden, wobei die Steuerspannung mittels einer Steuerungseinrichtung 7 der Antennenanordnung 1 einstellbar ist.

Überdies kann das Kontaktierungsmittel 4 einen Kondensator, bevorzugt mit einer einstellbaren Kapazität, und eine Spule, bevorzugt mit einer einstellbaren Induktivität, aufweisen.

Während die Positionierung des Kontaktierungsmittels 4 bevorzugt bei der Montage der Antennenanordnung 1 erfolgt, kann die Kapazität des Kondensators und/oder die Induktivität der Spule auch während des Betriebs der Antennenanordnung 1 geändert werden. Eine Änderung der Kapazität des Kondensators und/oder der Induktivität der Spule während des Betriebs der Antennenanordnung 1 bewirkt, dass bestimmte Parameter der Antennenanordnung 1 auch während des laufenden Betriebs angepasst werden können. So kann beispielsweise die Bandbreite, auf der mittels der Antennenanordnung 1 Daten gesendet bzw. empfangen werden, aufgrund der Antennengeometrie 50 MHz betragen. Durch eine Variation der Kapazität des Kondensators und/oder der Induktivität der Spule kann erreicht werden, dass dieses Band hin- und her-verschoben wird und folglich eine effektive Breite von beispielsweise 80 MHz erreicht werden kann. Diese Variation wird mittels einer an dem passiven elektrischen Bauelement 6 anliegenden Steuerungsspannung realisiert.

Anstelle eines Kondensators beziehungsweise einer Spule kann das Kontaktierungsmittel 4 alternativ lediglich ein Kurzschlusselement sein. Im Gegensatz zu dem Fall, dass für das Kontaktierungsmittel 4 der Kondensator und/oder die Spule vorgesehen ist, ist hierbei jedoch lediglich ein Parameter zum Einstellen der Parameter der Antenne 2 gegeben, nämlich die Position des Kontaktierungsmittels.

Bezüglich der soeben erwähnten Steuerungseinrichtung 7 ist vorgesehen, dass diese dazu eingerichtet ist, die mittels der Antennenanordnung 1 zu sendende Information zu codieren bzw. die zu empfangende Information zu decodieren und eine entsprechende Spannung in die Antenne 2 zur Erzeugung der elektromagnetische Welle einzuspeisen bzw. ein Signal, das mit einer von der Antenne 2 empfangenen Welle korrespondiert, zu empfangen und auszuwerten. Exemplarisch bewirkt die Steuerungseinrichtung 7 überdies mittels der Steuerung der entsprechenden Steuerungsspannung die Variation der Parameter des passiven elektrischen Bauelement 6, nämlich der Kapazität des Kondensators und/oder der Induktivität der Spule.

Die Antennenanordnung 1 umfasst eine Leiterplatte 9, auf der die Antenne 2, der Verstellabschnitt 3, die Steuerungseinrichtung 7 und weitere Komponenten der Antennenanordnung 1 angeordnet sind. Die Antenne 2 erstreckt sich unter einem rechten Winkel wegweisend von der Oberfläche der Leiterplatte 9. Der Masseabschnitt 5 ist ein flächig auf der Oberfläche der Leiterplatte 9 aufgedampfte Metallschicht, wobei der Verstellabschnitt 3 auf dem Masseabschnitt 5 angeordnet ist. Der Verstellabschnitt 3 verläuft hierbei im Wesentlichen parallel zu dem Masseabschnitt 5 und ist mittels einem isolierenden Klebstoff auf dem Masseabschnitt 5 befestigt. Der Verstellabschnitt 3 ist beim gezeigten Ausführungsbeispiel länglich, wobei das Kontaktierungsmittel 6 entlang der Längsrichtung des Verstellabschnitts 3 verschiebbar ist. Insgesamt bilden mithin der Verstellabschnitt 3 und das Kontaktierungsmittel 4 einen Schieberegler 8 aus.

Nachfolgend werden, insbesondere unter Bezugnahme auf Fig. 2, Details der Antenne 2 erläutert. Die Antenne 2 umfasst einen länglichen Antennenschaft 10 mit einem U-förmigen Profil und sicken- bzw. rinnenartige Vertiefungen 11 zur Versteifung der Antenne 2. Ferner weist das U-förmige Profil der Antenne 2 Unterbrechungen auf, so dass eine zuverlässige und wiederholgenaue Greif- und Setzfunktion eines für die Montage der Antennenanordnung 1 vorgesehenen Bestückungsroboters ermöglicht wird.

Die Antenne 2 weist einen Anbindungsabschnitt 12 auf, über dem diese stehend an der Leiterplatte 9 angeordnet bzw. befestigt ist. Die Antenne 2 bzw. der Anbindungsabschnitt 12 der Antenne 2 weist einen stirnseitig von dem Antennenschaft 10 abstehenden Steuerungspin 13 auf. Die Antenne 2 ist über den Steuerungspin 13 mit der Steuerungseinrichtung 7, die dazu eingerichtet ist, den Sende- bzw. Empfangsbetrieb der Antennenanordnung 1 zu steuern, verbunden. Der zur Welleneinspeisung in die Antenne 2 dienende Steuerungspin 13 ist mit der Leiterplatte 9 im Bereich einer Anschlussleitung 37 verlötet. Zur Feinjustierung der verstellbaren Antennenparameter ist die Steuerungseinrichtung 7 zudem dazu eingerichtet, als eine Anpassungsschaltung zu fungieren, mittels der die Feineinstellung vorgenommen werden kann.

Überdies umfasst der Anbindungsabschnitt 12 der Antenne 2 zwei Anheftpins 14, auf deren Funktion im Detail später im Rahmen des erfindungsgemäßen Verfahrens noch näher eingegangen werden wird.

Der Anbindungsabschnitt 12 der Antenne 2 weist zwei Befestigungspins 15, 16 zur Befestigung der Antenne 2 an der Leiterplatte 9 auf. Die Befestigungspins 15, 16 stehen seitlich von dem Antennenschaft 10 ab, weisen eine L-Form auf und dienen der sicheren Befestigung der Antenne 2 an der Leiterplatte 9. Die beiden Befestigungspins 15, 16 stehen hierbei, wie insbesondere aus den Fig. 2 und 3 ersichtlich wird, in einem rechten Winkel zueinander.

Obgleich vorgesehen sein kann, dass die Befestigungspins 15, 16 bzw. einer der Befestigungspins 15, 16 der Verstellabschnitt 3 ist, ist beim gezeigten Ausführungsbeispiel der Verstellabschnitt 3 in einem direkten Berührungskontakt mit dem Befestigungspin 16 elektrisch verbunden. Dies wird insbesondere aus der in Fig. 4 dargestellten Schnittdarstellung der Antennenanordnung 1 deutlich.

Bezüglich der Antenne 2 ist an dem Ende des Antennenschafts 10, das dem Anbindungsabschnitt 12 gegenüberliegt, ein Verlängerungsabschnitt 17 vorgesehen. Der Verlängerungsabschnitt 17 ist hierbei gewinkelt zum Antennenschaft 10 angeordnet bzw. erstreckt sich ringförmig innerhalb einer senkrecht zum Antennenschaft 10 stehenden Ebene. Der Verlängerungsabschnitt 17 und der Antennenschaft 10 sind unter Ausbildung eines Formschlusses formstabil miteinander verbunden sind. Der Verlängerungsabschnitt 17 bewirkt eine Verlängerung der Antenne 2, ohne dass hierzu die Gesamtlänge der Antenne 2 bzw. des Antennenschafts 10 verlängert werden müsste. Ein weiterer Bauraumbedarf in die Längsrichtung der Antenne bzw. des Antennenschafts ist mithin aufgrund des Verlängerungsabschnitts 17 nicht erforderlich. Zur mechanischen Verstärkung weist der Verlängerungsabschnitt 17 einen Falz 18 auf.

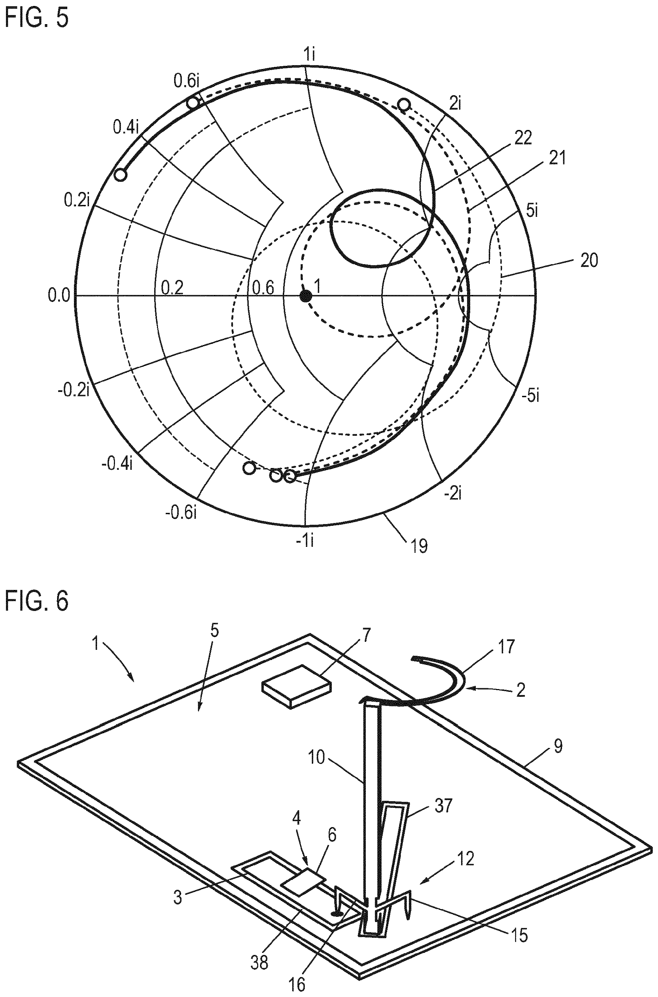

Wie bereits weiter oben erläutert wurde, basiert die Erfindung im Wesentlichen auf dem Gedanken, dass aufgrund der konkreten Position des Kontaktierungsmittels 4 eine gezielte Einstellung der hiervon abhängenden Antennenparameter, beispielsweise der Resonanzfrequenz bzw. der Impedanz, erreicht werden kann. Fig. 5 zeigt schematisch die Ergebnisse einer Simulation für eine Antenne 2 mit einer wie in der Fig. 2 dargestellten Geometrie. Die Fig.5 zeigt ein Smith-Diagramm 19 mit drei mit unterschiedlichen Simulationsparametern simulierten Kurven 20, 21, 22 betreffend die in Fig. 2 dargestellte Antenne 2. Wie dem Fachmann bekannt ist, veranschaulicht das Smith-Diagramm 19 die eine komplexe Größe darstellende Impedanz der Antenne 2, wobei bei den drei Simulationskurven 20, 21, 22 jeweils der Frequenzbereich von 600 MHz, der mit dem oberen Punkt der jeweiligen Kurve 20, 21, 22 korrespondiert, bis 1200 MHz, der mit dem unteren Punkt der jeweiligen Kurve 20, 21, 22 korrespondiert, durchlaufen wird. Der Simulation wurde eine Höhe der Antenne 2 von 46 mm zugrunde gelegt.

Für die erste Kurve 20 wurde eine Kapazität des als Kondensator ausgebildeten Kontaktierungsmittels 4 von 10 pF und eine Länge 23, wie sie aus der Fig. 4 ersichtlich wird, von 10 mm angenommen. Die Länge 23 bezeichnet den Abstand zwischen dem festen Anbindungspunkt des Befestigungspins 16 an dem Verstellabschnitt 3 und dem positionsveränderlichen Kontakteriungsmittel 4. Für die zweite Kurve 21 wurde eine Kapazität des Kondensators von 7 pF und eine Länge 23 von 0 mm angenommen. Für die dritte Kurve 22 wurde eine Kapazität des Kondensators von 4 pF und eine Länge 23 von 5 mm angenommen. Ersichtlich weist die Impedanz der Antenne 2 eine deutliche Abhängigkeit von den beiden Parametern Kapazität des Kondensators und Länge 23, also Position des Kontaktierungsmittels 4, auf. Im Zusammenhang mit den in der Fig. 5 dargestellten Simulationen wurde ersichtlich, dass für den Fall, dass als Kontaktierungsmittel 4 anstelle eines Kurzschlusselements ein Kondensator benutzt wird, durch die Variation der Kapazität des Kondensators erreicht werden kann, dass die gesamte Induktivität der Kurzschlussleitung reduziert werden kann, die aus dem Befestigungspin 16 und dem Verstellabschnitt 3 ausgebildet wird. Letztlich kann hierdurch eine stärkere Dynamik bei den in der Fig. 5 dargestellten Impedanzverläufen erreicht werden.

Figur 6 zeigt ein zweites Ausführungsbeispiel einer erfindungsgemäßen Antennenanordnung 1. Abgesehen von den nachfolgend erläuterten Unterschieden gelten sämtliche im Zusammenhang mit dem ersten Ausführungsbeispiel und anhand der Figuren 1 bis 5 erläuterten Aspekte gleichermaßen für das zweite Ausführungsbeispiel. Das in Fig. 6 gezeigte zweite Ausführungsbeispiel der Antennenanordnung 1 unterscheidet sich zu dem ersten Ausführungsbeispiel dadurch, dass der Verstellabschnitt 3 eine sich flächig auf der Oberfläche der Leiterplatte 9 erstreckende Komponente ist, wohingegen der Verstellabschnitt 3 des ersten Ausführungsbeispiels, wie oben erläutert wurde, eine separate und auf dem Masseabschnitt 5 angeordnete Komponente ist.

Exemplarisch ist der Verstellabschnitt 3 bei dem in Fig. 6 gezeigten Ausführungsbeispiel eine auf der Oberfläche der Leiterplatte 9 aufgedampfte Metallschicht bzw. ein auf der Oberfläche der Leiterplatte 9 aufgedampfter Leiter. Hierbei ist der Verstellabschnitt 3 vom Masseabschnitt 5 mittels einer rahmenartigen Ausnehmung oder Unterbrechung 38 der Metallschicht abgetrennt. Alternativ kann der Verstellabschnitt 3 eine Leiterbahn sein, die sich insbesondere über die komplette Länge der Leiterplatte 9 erstreckt.

Das Kontaktierungsmittel 4 ist, im Gegensatz zum ersten Ausführungsbeispiel, fest angeordnet, wobei die Befestigung des Kontaktierungsmittels 4 mittels eines Lots erfolgt, das mit dem Masseabschnitt 5, dem Verstellabschnitt 3 und dem Kontaktierungsmittels 4 in Kontakt steht. Die Positionierung des Kontaktierungsmittel und mithin die Einstellung der hiervon abhängenden Antennenparameter erfolgen hierbei folglich bereits bei der Montage der Antennenanordnung 1.

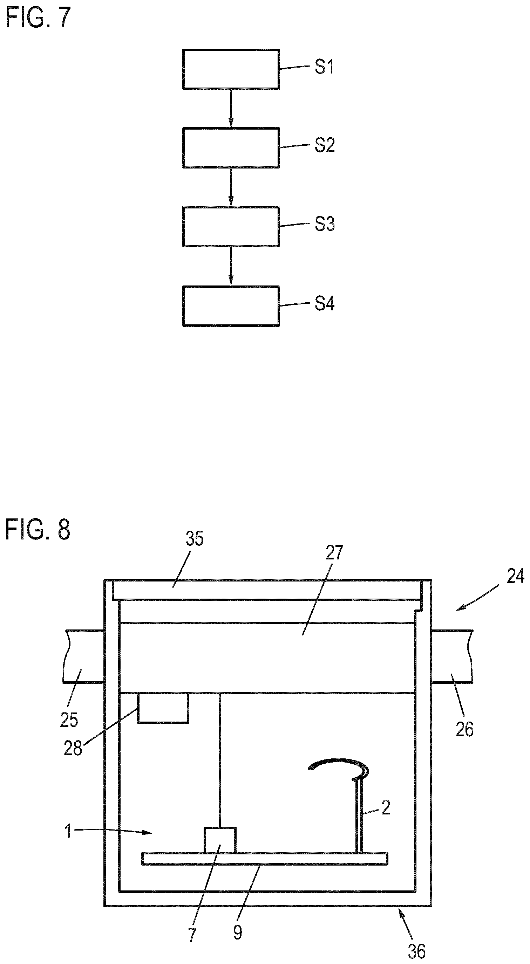

Nachfolgend und unter Bezugnahme auf Fig. 7 wird ein Ausführungsbeispiel eines erfindungsgemäßen Verfahrens zur Herstellung der Antennenanordnung 1 erläutert. Zunächst werden die Antenne 2, der Verstellabschnitt 3, das Kontaktierungsmittel 4 und eine Leiterplatte 9 mit dem Masseabschnitt 5 bereitgestellt. Der Verstellabschnitt 3 kann alternativ auch, gleichermaßen wie der Masseabschnitt 5, als eine bereits von Haus auf auf der Leiterplatte 9 angeordnete, insbesondere aufgedampfte, Metallschicht vorgesehen sein, wie insbesondere anhand des zweiten Ausführungsbeispiels der erfindungsgemäßen Antennenanordnung 1 erläutert wurde.

Im Schritt S1 wird der Verstellabschnitt 3, sofern dieser nicht ohnehin bereits an der Leiterplatte angeordnet ist, an der Leiterplatte 9 befestigt, wobei anschließend oder zuvor das Kontaktierungsmittel positionsveränderlich oder fest bezüglich der Längsrichtung des Verstellabschnitts 3 an diesem befestigt wird. Hierbei wird zudem mittels einer Lötverbindung eine elektrische Verbindung, deren zugehörige Kontaktierungsstelle verschiebbar bzw. positionsveränderlich ist, zwischen dem Verstellabschnitt 3 und dem Masseabschnitt 5 über das Kontaktierungsmittel 4 hergestellt.

Im nächsten Schritt S2 des Verfahrens wird die Antenne 2 an die Leiterplatte 9 derart angebunden, dass sich der Antennenschaft 10 von der Oberfläche der Leiterplatte 9 wegweisend erstreckt. Hierzu wird die Antenne 2 auf die Leiterplatte 9 aufgesetzt, wobei der Steuerungspin 13 und die Anheftpins 14 durch Löcher der Leiterplatte 9 gesteckt werden.

Für die in den Schritten S1 und S2 erfolgenden Bestückungsvorgänge wird ein Bestückungsroboter mit einer Greifvorrichtung verwendet, mittels der insbesondere die Antenne 2 gegriffen und anschließend zur Leiterplatte 9 gebracht und auf diese aufgesetzt wird. Die seitlichen Wände des Profils der Antenne 2 weisen, wie bereits erläutert wurde, eine unterbrochene U-Form auf, wobei mittels der Unterbrechungen eine zuverlässige und wiederholgenaue Greif- und Setzfunktion des Bestückungsroboters während der Fertigung der Antennenanordnung 1 ermöglicht wird.

Im nächsten Schritt S3 des Verfahrens werden die Anheftpins 14 mittels einer Clinchverbindung an die Leiterplatte 9 angeheftet. Die unten an der Leiterplatte 9 herausragenden Enden der Anheftpins 14 werden hierbei derart umgebogen, dass deren Enden beispielhaft einander zugewandt sind. Hierdurch wird eine provisorische Befestigung der Antenne 2 an der Leiterplatte 9 realisiert, so dass die Antenne 2 während der nun folgenden Produktionsschritte ausreichend sicher in ihrer stehenden Position auf der Leiterplatte 9 verbleibt. Alternativ kann der Schritt S1 auch erst jetzt erfolgen.

Im nächsten Schritt S4 des Verfahrens werden der Steuerungspin 13, die Anheftpins 14 und die Befestigungspins 15, 16 mittels einer Lötverbindung an die Leiterplatte 9 befestigt. Mit dem Verlöten des Befestigungspins 16 an der Leiterplatte 9 erfolgt neben der finalen Befestigung der Antenne 2 an der Leiterplatte 9 gleichzeitig eine elektrische Kontaktierung zwischen dem Befestigungspin 16 und dem Verstellabschnitt 3. Letztlich wird hierbei eine elektrische Verbindung zwischen der Antenne 2 und dem Masseabschnitt 5 über den Verstellabschnitt 3 und das Kontaktierungsmittel 4 hergestellt.

Nachfolgend und unter Bezugnahme auf Fig. 8 wird ein erfindungsgemäßes elektrisches Gerät 27 beschrieben. Im vorliegend beschriebenen Ausführungsbeispiel ist das elektrische Gerät 27 ein Fluidzähler, nämlich ein Wasserzähler. Alternativ kann das elektrische Gerät 27, mit entsprechenden Modifikationen, gleichermaßen ein Gaszähler oder ein Wärmemengenzähler sein. Ganz allgemein kann das elektrische Gerät 27 ein Kommunikationsmodul sein.

Das als ein Wasserzähler ausgebildete elektrische Gerät 24 weist einen Eingang 25 und einen Ausgang 26 für ein Fluid, nämlich für Wasser, dessen Durchflussmenge erfasst werden soll, auf. Der Fluidzähler 24 umfasst hierzu eine mit der Steuerungseinrichtung 7 verbundene Erfassungseinheit 27, mit der die zu erfassende Fluiddurchflussmenge ermittelbar ist. Diese Erfassung erfolgt exemplarisch mittels Ultraschall oder mittels einem sich in Abhängigkeit der Durchflussmenge drehenden Flügelrads, dessen Bewegung induktiv erfasst wird.

Der Fluidzähler 24, der vorliegend als ein Wasserzähler bzw. eine Wasseruhr ausgebildet ist, umfasst die Antennenanordnung 1. Betrieben wird der Fluidzähler 24 mittels eine Batterie 28. Die Batterie 28 sowie sämtliche Komponenten der Antennenanordnung 1, insbesondere die Leiterplatte 9 mit den hierauf befestigten Komponenten wie z.B. die Antenne 2, sind innerhalb eines mittels einem Deckel 35 verschließbaren Gehäuses 36 des Fluidzählers 24 angeordnet. Obgleich die in der schematischen Figur 8 anders dargestellt ist, sind die Steuerungseinrichtung 7 und die Erfassungseinheit 27 bevorzugt auf der Leiterplatte 9 angeordnet.

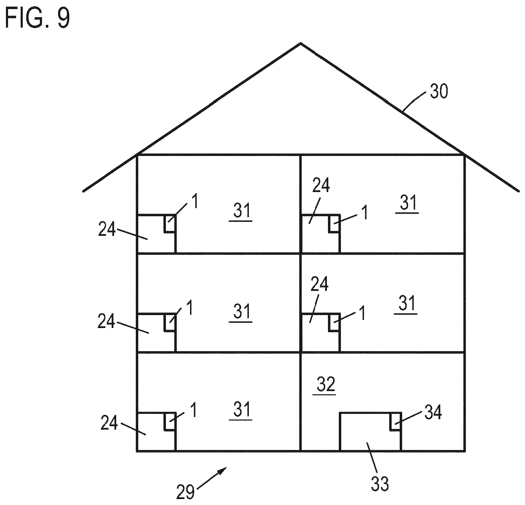

Fig. 9 zeigt ein erfindungsgemäßes System 29, das in einer als Wohnhaus ausgebildeten Wohneinheit 30 mit fünf Wohnungen 31 und einem Versorgungsraum 32 vorgesehen ist. Das System 29 umfasst hierbei exemplarisch fünf als Fluidzähler ausgebildete elektrische Geräte 24, nämlich einen pro Wohnung 31, mit jeweils einer Antennenanordnung 1. Das System 29 umfasst ferner eine Auswerteinrichtung 33, die sich exemplarisch in dem Versorgungsraum 32 der Wohneinheit 30 befindet. Die Auswerteinrichtung 33 umfasst eine Antennenanordnung 34, die beispielsweise gemäß der oben beschriebenen Antennenanordnung 1 ausgebildet sein kann. Über die Antennenanordnungen 1, 34 kann eine bidirektionale Kommunikationsverbindung zwischen der Auswerteinrichtung 33 und jedem der elektrischen Geräte 24 hergestellt werden. Beispielsweise kann die Auswerteinrichtung 33, insbesondere in regelmäßigen Zeiträumen oder bei Vorliegen eines Triggersignals in der Auswerteinrichtung 33, ein Anfragesignal aussenden, das seitens der Fluidzähler 24 mittels der jeweiligen Antennenanordnung 1 erfassbar ist. Die Steuerungseinrichtungen 7 der Fluidzähler 24 sind jeweils dazu eingerichtet, bei Vorliegen des Anfragesignals ein entsprechendes Antwortsignal über die Antennenanordnung 1 zu senden, das mittels der Antennenanordnung 34 von der Auswerteinrichtung 33 erfassbar ist und Informationen betreffend die aktuelle Verbrauchsmenge des Fluids und weitere Informationen wie beispielsweise Zähleridentifikationsnummern oder dergleichen beinhaltet. Diese Informationen können seitens der Auswerteinrichtung 33 gespeichert, verarbeitet oder, beispielsweise über eine Internetverbindung, an eine zentrale Recheneinrichtung eines Versorgungsunternehmens übersandt oder von Servicepersonal vor Ort abgefragt werden.

### Bezugszeichenliste

- 1: Antennenanordnung
- 2: Antenne
- 3: Verstellabschnitt
- 4: Kontaktierungsmittel
- 5: Masseabschnitt
- 6: passives elektrisches Bauelement
- 7: Steuerungseinrichtung
- 8: Schieberegler
- 9: Leiterplatte
- 10: Antennenschaft
- 11: Vertiefungen
- 12: Anbindungsabschnitt
- 13: Steuerungspin
- 14: Anheftpin
- 15: Befestigungspin
- 16: Befestigungspin
- 17: Verlängerungsabschnitt
- 18: Falz
- 19: Smith-Diagramm
- 20: Kurven
- 21: Kurven
- 22: Kurven
- 23: Länge
- 24: elektrisches Gerät
- 25: Eingang
- 26: Ausgang
- 27: Erfassungseinheit
- 28: Batterie
- 29: System
- 30: Wohneinheit
- 31: Wohnungen
- 32: Versorgungsraum
- 33: Auswerteinrichtung
- 34: Antennenanordnung
- 35: Deckel
- 36: Gehäuse
- 37: Anschlussleitung
- 38: Unterbrechung

## Patentansprüche

1. Antennenanordnung für ein elektrisches Gerät (24), umfassend eine Antenne (2) zum Senden und/oder Empfangen von Informationen mittels elektromagnetischer Wellen, wobei die Antennenanordnung (1) einen als eine Kontaktierungsstrecke ausgebildeten Verstellabschnitt (3) aufweist, der ein Teil der Antenne (2) ist, wobei die Antennenanordnung (1) ein an dem Verstellabschnitt (3) bezüglich der Kontaktierungsstrecke positionsveränderlich angeordnetes Kontaktierungsmittel (4) aufweist, wobei der Verstellabschnitt (3) über das Kontaktierungsmittel (4) mit einem eine elektrische Masse ausbildenden Masseabschnitt (5) der Antennenanordnung (1) derart elektrisch verbunden und **dadurch gekennzeichnet ist, dass** der Verstellabschnitt (3) länglich ist und das Kontaktierungsmittel (4) entlang einer Längsrichtung des Verstellabschnitts (3) verschiebbar ist.

2. Antennenanordnung nach Anspruch 1,
**dadurch gekennzeichnet,**
**dass** das Kontaktierungsmittel (4) ein Kurzschlusselement oder wenigstens ein passives elektrisches Bauelement (6), ist oder aufweist.

3. Antennenanordnung nach einem der vorangehenden Ansprüche,
**dadurch gekennzeichnet,**
**dass** die Antennenanordnung (1) eine Leiterplatte (9), auf der die Antenne (2) angeordnet ist, umfasst, wobei sich der Masseabschnitt (5) flächig auf der Oberfläche der Leiterplatte (9) erstreckt, wobei der Verstellabschnitt (3) auf dem Masseabschnitt (5) angeordnet ist oder sich flächig auf der Oberfläche der Leiterplatte (9) erstreckt.

4. Antennenanordnung nach einem der vorangehenden Ansprüche,
**dadurch gekennzeichnet,**
**dass** die an der oder einer Leiterplatte (9) angebundene Antenne (2) einen länglichen Antennenschaft (10) aufweist, der sich von der Oberfläche der Leiterplatte (9 wegweisend erstreckt.

5. Antennenanordnung nach einem der vorangehenden Ansprüche,
**dadurch gekennzeichnet,**
**dass** die Antenne (2) wenigstens einen Steuerungspin (13) aufweist, über den die Antenne (2) mit einer Steuerungseinrichtung (7), die dazu eingerichtet ist, den Sende- und/oder Empfangsbetrieb der Antennenanordnung (1) zu steuern, elektrisch verbindbar oder verbunden ist.

6. Antennenanordnung nach einem der vorangehenden Ansprüche,
**dadurch gekennzeichnet,**
**dass** die Antenne (2) wenigstens einen Befestigungspin (15, 16) zur Befestigung der Antenne (2) an der Leiterplatte (9) aufweist.

7. Antennenanordnung nach Anspruch 6,
**dadurch gekennzeichnet,**
**dass** der Befestigungspin (16) der Verstellabschnitt (3) ist oder der Befestigungspin (16) mit dem Verstellabschnitt (3) elektrisch verbunden ist.

8. Antennenanordnung nach einem der vorangehenden Ansprüche,
**dadurch gekennzeichnet,**
**dass** die Antenne (2) zur Steigerung der Festigkeit zumindest abschnittsweise ein U-förmiges Profil und/oder sicken- oder rinnenartige Vertiefungen aufweist.

9. Antennenanordnung nach einem der vorangehenden Ansprüche,
**dadurch gekennzeichnet,**
**dass** die Antenne (2) einen gewinkelt zum Antennenschaft (10) angeordneten und Verlängerungsabschnitt (17) aufweist.

10. Antennenanordnung nach einem der vorangehenden Ansprüche,
**dadurch gekennzeichnet,**
**dass** die Antennenanordnung (1) zum Übertragen von Informationen mittels elektromagnetischer Wellen im Hochfrequenzbereich ausgebildet ist.

11. Verfahren zur Herstellung einer Antennenanordnung (1) für ein elektrisches Gerät (24) wobei für die Antennenanordnung (1) eine Antenne (2) zum Senden und/oder Empfangen von Informationen mittels elektromagnetischer Wellen verwendet wird, wobei
ein einen Teil der Antenne (2) ausbildenden Verstellabschnitt (3) verwendet wird, wobei an den eine Kontaktierungsstrecke ausbildenden Verstellabschnitt (3) ein Kontaktierungsmittel (4) bezüglich der Kontaktierungsstrecke positionsveränderlich angeordnet wird, wobei der Verstellabschnitt (3) über das Kontaktierungsmittel (4) mit einem eine elektrische Masse ausbildenden Masseabschnitt (5) derart elektrisch verbunden wird, dass eine Antennengeometrie die Antenne (2) und zumindest einen Teil des Verstellabschnitts (3), der von der Position des Kontaktierungsmittels (4) abhängt, umfasst, **dadurch gekennzeichnet, dass** der Verstellabschnitt (3) länglich ist und das Kontaktierungsmittel (4) entlang einer Längsrichtung des Verstellabschnitts (3) verschiebbar ist.

12. Verfahren nach Anspruch 11,
**dadurch gekennzeichnet,**
**dass** die oder den oder einen länglichen Antennenschaft (10) aufweisende Antenne (2) derart an der oder einer Leiterplatte (9) angebunden wird, dass sich der Antennenschaft (10) von der Oberfläche der Leiterplatte (9) wegweisend erstreckt, wobei die Antenne (2) über wenigstens den oder einen Steuerungspin (13) mit der oder einer Steuerungseinrichtung (7), die dazu eingerichtet ist, den Sende- und/oder Empfangsbetrieb der Antennenanordnung (1) zu steuern, verbunden wird, wobei der Steuerungspin (13) und/oder der oder ein Befestigungspin (15, 16) und/oder wenigstens ein Anheftpin (14) mit der Leiterplatte (9), nachdem die Antenne (2) auf der Leiterplatte (9) angeordnet wurde und bevor der Steuerungspin (13) und/oder der Befestigungspin (15, 16) und/oder der Anheftpin (14) verlötet wird, auf der Leiterplatte (9) angeheftet wird.

13. Elektrisches Gerät, das zumindest eine Antennenanordnung (1) nach einem der Ansprüche 1 bis 10 umfasst.

14. Elektrisches Gerät nach Anspruch 13,
**dadurch gekennzeichnet,**
**dass** es ein Fluidzähler oder ein Wärmemengenzähler oder ein Kommunikationsmodul ist.

15. System umfassend wenigstens ein elektrisches Gerät (24) nach Anspruch 13 oder 14 und wenigstens eine Auswerteinrichtung (33) zur Auswertung der Informationen, wobei mittels der Antennenanordnung (1) eine Kommunikationsverbindung zwischen dem wenigstens einen elektrischen Gerät (24) und der wenigstens einen Auswerteinrichtung (33), zumindest zur Übertragung der Informationen herstellbar ist.

## Claims

1. Antenna arrangement for an electrical device (24), comprising an antenna (2) for transmitting and/or receiving information by means of electromagnetic waves, wherein the antenna arrangement (1) has an adjusting section (3) designed as a contact strip that is part of the antenna (2), wherein the antenna arrangement (1) has contacting means (4) arranged on the adjusting section (3) variably in its position with respect to the contact strip, wherein the adjusting section (3) electrically connected via the contacting means (4) to an earthing section (5) of the antenna arrangement (1) that forms an electrical earth such that and **characterized in that** the adjusting section (3) is elongated and the contacting means (4) can be moved along a longitudinal direction of the adjusting section (3).

2. Antenna arrangement according to Claim 1,
**characterized in that**
the contacting means (4) is or has a short-circuit element or at least one passive electrical component (6).

3. Antenna arrangement according to one of the preceding claims,
**characterized in that**
the antenna arrangement (1) comprises a circuit board (9) on which the antenna (2) is arranged, wherein the earthing section (5) extends in a planar manner over the surface of the circuit board (9), wherein the adjusting section (3) is arranged on the earthing section (5) or extends in a planar manner over the surface of the circuit board (9).

4. Antenna arrangement according to one of the preceding claims,
**characterized in that**
the antenna (2), which is joined to the or a circuit board (9), has an elongated antenna shaft (10) that extends pointing away from the surface of the circuit board (9).

5. Antenna arrangement according to one of the preceding claims,
**characterized in that**
the antenna (2) has at least one control pin (13), via which the antenna (2) can be or is electrically connected to a control device (7) that is configured to control the transmitting and/or receiving operation of the antenna arrangement (1).

6. Antenna arrangement according to one of the preceding claims,
**characterized in that**
the antenna (2) has at least one fastening pin (15, 16) for fastening the antenna (2) to the circuit board (9).

7. Antenna arrangement according to Claim 6,
**characterized in that**
the fastening pin (16) is the adjusting section (3) or the fastening pin (16) is electrically connected to the adjusting section (3).

8. Antenna arrangement according to one of the preceding claims,
**characterized in that**
to increase the strength, the antenna (2) has, at least in some sections, a U-shaped profile and/or corrugated or channel-like depressions.

9. Antenna arrangement according to one of the preceding claims,
**characterized in that**
the antenna (2) has an extension section (17) arranged at an angle to the antenna shaft (10).

10. Antenna arrangement according to one of the preceding claims,
**characterized in that**
the antenna arrangement (1) is designed for transmitting information by means of electromagnetic waves in the high frequency range.

11. Method for manufacturing an antenna arrangement (1) for an electrical device (24), wherein an antenna (2) for transmitting and/or receiving information by means of electromagnetic waves is used for the antenna arrangement (1), wherein an adjusting section (3) forming a part of the antenna (2) is used, wherein on the adjusting section (3) that forms a contact strip a contacting means (4) is arranged variably in its position with respect to the contact strip, wherein the adjusting section (3) is electrically connected via the contacting means (4) to an earthing section (5) that forms an electrical earth in such a way that an antenna geometry comprises the antenna (2) and at least part of the adjusting section (3) that depends on the position of the contacting means (4), **characterized in that** the adjusting section (3) is elongated and the contacting means (4) can be moved along a longitudinal direction of the adjusting section (3).

12. Method according to Claim 11,
**characterized in that**
the antenna (2) having the or an elongated antenna shaft (10) is joined to the or a circuit board (9) in such a way that the antenna shaft (10) extends pointing away from the surface of the circuit board (9), wherein the antenna (2) is connected via at least the or a control pin (13) to the or a control device (7) that is configured to control the transmitting and/or receiving operation of the antenna arrangement (1), wherein the control pin (13) and/or the or a fastening pin (15, 16) and/or at least one attachment pin (14) is attached to the circuit board (9) after the antenna (2) has been arranged on the circuit board (9) and before the control pin (13) and/or the fastening pin (15, 16) and/or the attachment pin (14) is soldered to the circuit board (9).

13. Electrical device that comprises at least one antenna arrangement (1) according to one of Claims 1 to 10.

14. Electrical device according to Claim 13,
**characterized in that**
it is a fluid meter or a heat meter or a communication module.

15. System comprising at least one electrical device (24) according to Claim 13 or 14 and at least one evaluation device (33) for evaluating the information, wherein a communication connection between the at least one electrical device (24) and the at least one evaluation device (33) can be set up by means of the antenna arrangement (1) at least for transmission of the information.

## Revendications

1. Arrangement d'antenne pour un appareil électrique (24), comprenant une antenne (2) destinée à émettre et/ou recevoir des informations au moyen d'ondes électromagnétiques, l'arrangement d'antenne (1) possédant une portion de réglage (3) réalisée sous la forme d'un trajet d'établissement de contact, qui est une partie de l'antenne (2), l'arrangement d'antenne (1) possédant un moyen d'établissement de contact (4) disposé sur la portion de réglage (3) de manière à pouvoir changer de position par rapport au trajet d'établissement de contact, la portion de réglage (3) reliée électriquement à une portion de masse (5) formant une masse électrique de l'arrangement d'antenne (1) par l'intermédiaire du moyen d'établissement de contact (4) de telle sorte et **caractérisée en ce que** la portion de réglage (3) est allongée et le moyen d'établissement de contact (4) peut être déplacé le long d'une direction longitudinale de la portion de réglage (3).

2. Arrangement d'antenne selon la revendication 1,
**caractérisé en ce**
**que** le moyen d'établissement de contact (4) est ou possède un élément de court-circuit ou au moins un composant électrique passif (6).

3. Arrangement d'antenne selon l'une des revendications précédentes,
**caractérisé en ce**
**que** l'arrangement d'antenne (1) comprend une carte de circuit imprimé (9) sur laquelle est disposée l'antenne (2), la portion de masse (5) s'étendant à plat sur la surface de la carte de circuit imprimé (9), la portion de réglage (3) étant disposée sur la portion de masse (5) ou s'étendant à plat sur la surface de la carte de circuit imprimé (9).

4. Arrangement d'antenne selon l'une des revendications précédentes,
**caractérisé en ce**
**que** l'antenne (2) connectée à la ou à une carte de circuit imprimé (9) possède une tige d'antenne (10) allongée qui s'étend de manière à s'éloigner de la surface de la carte de circuit imprimé (9).

5. Arrangement d'antenne selon l'une des revendications précédentes,
**caractérisé en ce**
**que** l'antenne (2) possède au moins une broche de commande (13), par l'intermédiaire de laquelle l'antenne (2) peut être connectée électriquement ou est connectée à un dispositif de commande (7) qui est conçu pour commander le fonctionnement d'émission et/ou de réception de l'arrangement d'antenne (1).

6. Arrangement d'antenne selon l'une des revendications précédentes,
**caractérisé en ce**
**que** l'antenne (2) possède au moins une broche de fixation (15, 16) destinée à fixer l'antenne (2) à la carte de circuit imprimé (9).

7. Arrangement d'antenne selon la revendication 6,
**caractérisé en ce**
**que** la broche de fixation (16) est la portion de réglage (3) ou la broche de fixation (16) est connectée électriquement à la portion de réglage (3).

8. Arrangement d'antenne selon l'une des revendications précédentes,
**caractérisé en ce**
**que** l'antenne (2) présente, au moins dans certaines portions, un profil en U et/ou des creux en forme de moulures ou de rainures afin d'augmenter la résistance.

9. Arrangement d'antenne selon l'une des revendications précédentes,
**caractérisé en ce**
**que** l'antenne (2) possède une portion d'extension (17) disposée de manière coudée par rapport à la tige d'antenne (10).

10. Arrangement d'antenne selon l'une des revendications précédentes,
**caractérisé en ce**
**que** l'arrangement d'antenne (1) est configuré pour transmettre des informations au moyen d'ondes électromagnétiques dans la gamme des hautes fréquences.

11. Procédé de fabrication d'un arrangement d'antenne (1) pour un appareil électrique (24), une antenne (2) destinée à émettre et/ou recevoir des informations au moyen d'ondes électromagnétiques étant utilisée pour l'arrangement d'antenne (1), une portion de réglage (3) qui forme une partie de l'antenne (2) étant utilisée, un moyen d'établissement de contact (4) étant disposé sur la portion de réglage (3) formant un trajet d'établissement de contact de manière à pouvoir changer de position par rapport au trajet d'établissement de contact, la portion de réglage (3) étant reliée électriquement à une portion de masse (5) formant une masse électrique par l'intermédiaire du moyen d'établissement de contact (4) de telle sorte qu'une géométrie d'antenne comprend l'antenne (2) et au moins une partie de la portion de réglage (3) qui dépend de la position du moyen d'établissement de contact (4), **caractérisé en ce que** la portion de réglage (3) est allongée et le moyen d'établissement de contact (4) peut être déplacé le long d'une direction longitudinale de la portion de réglage (3).

12. Procédé selon la revendication 11,
**caractérisé en ce**
**que** l'antenne (2) qui possède la ou les ou une tige d'antenne allongée (10) est connectée à la ou une carte de circuit imprimé (9) de telle sorte que la tige d'antenne (10) s'étend de manière à s'éloigner de la surface de la carte de circuit imprimé (9), l'antenne (2) étant connectée au moins par le biais de la ou d'une broche de commande (13) au ou à un dispositif de commande (7), qui est conçu pour commander le fonctionnement d'émission et/ou de réception de l'arrangement antenne (1), la broche de commande (13) et/ou la ou une broche de fixation (15, 16) et/ou au moins une broche d'attache (14) étant attachée à la carte de circuit imprimé (9) après que l'antenne (2) a été disposée sur la carte de circuit imprimé (9) et avant que la broche de commande (13) et/ou la broche de fixation (15, 16) et/ou la broche d'attache (14) ne soient soudées à la carte de circuit imprimé (9).

13. Appareil électrique, qui comprend au moins un arrangement d'antenne (1) selon l'une des revendications 1 à 10.

14. Appareil électrique selon la revendication 13,
**caractérisé en ce**
**qu'**il s'agit d'un compteur de fluide ou d'un compteur de quantité de chaleur ou d'un module de communication.

15. Système comprenant au moins un appareil électrique (24) selon la revendication 13 ou 14 et au moins un dispositif d'évaluation (33) destiné à l'évaluation des informations, une liaison de communication pouvant être établie au moyen de l'arrangement d'antenne (1) entre l'au moins un appareil électrique (24) et l'au moins un dispositif d'évaluation (33), au moins pour la transmission des informations.
